# EUROPEAN PATENT APPLICATION

(11) **EP 2 251 102 A1**
(43) Date of publication of application: **17.11.2010**
(21) Application number: 08872283.0
(22) Date of filing: 12.11.2008
(51) Int. Cl.: B08B 3/02, A01K 75/00

(54) **UNDERWATER CLEANING ROBOT AND AUXILIARY CLEANING WORK MACHINE**

(30) Priority: 14.02.2008 JP 2008033699; 10.04.2008 JP 2008102780; 10.04.2008 JP 2008102781
(71) Applicant: Yanmar Co., Ltd., Osaka-shi, Osaka 530-0013 (JP)
(72) Inventor: OSAKA, Takitarou, Amagasaki-shi Hyogo 661-0001 (JP); YAKUSHIJI, Hideo, Amagasaki-shi Hyogo 661-0001 (JP); HIRATA, Daisuke, Amagasaki-shi Hyogo 661-0001 (JP)
(74) Representative: Harland, Linda Jane
(86) International application number: PCT/JP2008/070565
(87) International publication number: WO 2009/101735

(57) **Abstract**

In a submersible cleaning robot comprising a robot body (2) that moves along the surface of a cleaning subject item present underwater, and a cleaning nozzle unit (3) that is provided within the robot body and cleans the cleaning subject item by jetting high-pressure water towards the surface of the cleaning subject item, an auxiliary cleaning work device (70) is installed to the robot body. The auxiliary cleaning work device is provided with a rotary shaft (76) rotatably provided in a work device body (71) , a cleaning nozzle unit (72) that is provided in a bottom section of the rotary shaft, jets high-pressure water, and rotates in unison with the rotary shaft due to a reaction force of jetting of high-pressure water at the surface of the cleaning subject item and thus cleans the cleaning subject item, and a propeller (73) that rotates pursuant to rotation of a rotary shaft provided above the aforementioned rotary shaft, thus producing a force for pushing the work device body towards the surface of the cleaning subject item.

## Description

### Technical Field

The present invention relates to a submersible cleaning robot that cleans cleaning subject items such as aquaculture fish nets and ship hulls, by jetting of high-pressure water.

### Background Art

Submersible cleaning robots for, for example, removing seaweed, algae, and shellfish, etc. that have become attached to aquaculture fish nets, and for removing dirt that has become attached to ship hulls, etc., are known in the conventional technology (for example, see Patent Document 1).

Such a submersible cleaning robot cleans a cleaning subject item while moving along a submerged surface of the cleaning subject item by jetting high-pressure water from a cleaning nozzle unit towards this surface of the cleaning subject item. The cleaning nozzle unit is mounted on a rotary shaft provided on a robot body so as to be capable of rotation and rotates in unison with this rotary shaft due to a reaction force of the jetting of high-pressure water at the surface of the cleaning subject item.

Furthermore, a propeller that generates a propulsion force for pushing the robot body toward the surface of the cleaning subject item by rotating pursuant to rotation of the rotary shaft is mounted on this rotary shaft. Also, an introduction space is provided in the submersible cleaning robot such that the propeller that rotates can introduce water. Water is introduced from this introduction space towards the propeller, producing a water current that blows to the outside of the submersible cleaning robot, and thus a propulsion force is obtained in the submersible cleaning robot, and a state is maintained in which the submersible cleaning robot makes contact with the aquaculture fish net with a predetermined force.
Patent Document 1: JP3592204

### Disclosure of Invention

### Problem to be Solved by the Invention

Because the above conventional submersible cleaning robot is configured to clean with only a cleaning nozzle unit provided in the robot body, it takes time to clean the aquaculture fish net, particularly when the aquaculture fish net is large.

To improve cleaning speed in order to shorten the cleaning time of the aquaculture fish net, it is necessary to accelerate the running speed of the submersible cleaning robot, or increase the width that the submersible cleaning robot can clean.

However, when the running speed is accelerated, underwater running resistance increases, so there are problems such as slippage of the submersible cleaning robot and unstable attitude of the submersible cleaning robot. Therefore, the running speed of the submersible cleaning robot is limited, with that limit being about 1.5 to 2.0 times the present speed.

On the other hand, when the robot body and the size of the cleaning nozzle unit are enlarged in order to increase the cleaning width, weight and cost become excessive, so that it is not practical to handle the submersible cleaning robot at sea, so increasing size is not easy.

Because aquaculture nets are flexible, when the size of the robot body and the cleaning nozzle unit is increased, it is not possible to follow deformations in synthetic netting, resulting in areas that are left uncleaned.

Consequently, the present invention was made in order to address the above problems, and it is an object thereof to provide a configuration in which an auxiliary cleaning work device separate from a robot body is mounted to the robot body, and to improve the efficiency of cleaning a cleaning subject item by enlarging the cleaning area of a submersible cleaning robot.

### Means for Solving Problem

The present invention was made in order to address the above problems, and provides a submersible cleaning robot having a robot body that moves along the surface of a cleaning subject item present underwater, and a cleaning nozzle unit that is provided within the robot body and cleans the cleaning subject item by jetting high-pressure water towards the surface of the cleaning subject item, in which an auxiliary cleaning work device is mounted to the robot body, and the auxiliary cleaning work device includes a rotary shaft rotatably provided in a work device body, a cleaning nozzle unit that is provided in a bottom section of the rotary shaft, jets high-pressure water, and rotates in unison with the rotary shaft due to a reaction force of jetting of high-pressure water at the surface of the cleaning subject item and thus cleans the cleaning subject item, and a propeller that rotates pursuant to rotation of a rotary shaft provided above the aforementioned rotary shaft, thus producing a force for pushing the work device body towards the surface of the cleaning subject item.

In the submersible cleaning robot of the present invention, a cleaning nozzle unit provided within a robot body cleans the surface of a cleaning subject item. Also, a cleaning nozzle unit of an auxiliary cleaning work device can clean the surface of a cleaning subject item. As a result, it is possible to efficiently and stably clean the surface of the cleaning subject item in a wide range.

In the submersible cleaning robot, the auxiliary cleaning work device is connected to the rear of the robot body via a support arm, the support arm is provided in order to raise and lower the auxiliary cleaning work device and is capable of swinging in the upward and downward directions by a set angle, and moreover, the auxiliary cleaning work device is capable of rotating around the support arm such that the below cleaning nozzle unit inclines towards the outside.

An auxiliary cleaning work device is installed to a submersible cleaning robot that cleans a cleaning subject item by jetting high-pressure water from a cleaning nozzle unit towards a surface of the submerged cleaning subject item while moving along the surface of this cleaning subject item, the auxiliary cleaning work device having a rotary shaft rotatably provided in a work device body, a cleaning nozzle unit that is provided in a bottom section of the rotary shaft, jets high-pressure water, and rotates in unison with the rotary shaft due to a reaction force of jetting of high-pressure water at the surface of the cleaning subject item and thus cleans the cleaning subject item, and a propeller that rotates pursuant to rotation of a rotary shaft provided above the aforementioned rotary shaft, thus producing a force for pushing the work device body towards the surface of the cleaning subject item, and the work device body is connectable to the robot body via a support arm, the support arm is provided in order to raise and lower the auxiliary cleaning work device and is capable of swinging in the upward and downward directions by a set angle, and moreover, the auxiliary cleaning work device is capable of rotating around the support arm such that the below cleaning nozzle unit inclines towards the outside.

The robot body is provided with a submersible camera that captures images to the front of the robot body and a compass that is disposed in the field of view of the submersible camera and indicates a heading, and at least a core that displays the compass heading is transparently configured, and images that have been captured by the submersible camera are displayed along with the compass on a screen of a monitor apparatus disposed at a position separated from the robot body.

In this submersible cleaning robot of the present invention, because at least a core that displays the compass heading is transparently configured, even during cleaning work with backlighting, it is possible to reliably view the core of the compass, so it is possible to know the attitude and direction of the submersible cleaning robot.

In the submersible cleaning robot, the compass is fixed to the robot body via a transparent mounting base.

In the submersible cleaning robot the robot body is provided with a raising/lowering handle having a catch portion detachably connected to a raising/lowering handle such as a rope, the raising/lowering handle being provided with a catch portion that is capable of changing positions between a suspended attitude A in which the catch portion is positioned above the robot body and the robot body can be raised/lowered and a storage attitude B in which the connecting portion moves more to the robot body side than in the suspended attitude A, and a biasing means that biases the raising/lowering handle to the storage attitude.

When this submersible cleaning robot of the present invention is suspended by connecting the catch portion with a raising/lowering means such as a rope, a suspended attitude is established in which that catch portion is positioned above the robot body. Therefore, when raising/lowering the submersible cleaning robot, it is possible to stably suspend the submersible cleaning robot without tilting. As a result, during work to raise/lower the submersible cleaning robot, human assistance to hold the submersible cleaning robot is not necessary, and it is possible to stably raise/lower the submersible cleaning robot.

In the submersible cleaning robot, the cleaning nozzle unit is mounted to a rotary shaft that is rotatably provided in the robot body so as to rotate due to a reaction force of high-pressure water jetted at the surface of the cleaning subject item, the rotary shaft is provided with a propeller that produces a propulsion force for pushing a robot body towards the surface of the cleaning subject item, an introduction space such that a propeller that rotates can introduce water and an opening in which the propeller is housed are formed in the robot body, and the raising/lowering handle is positioned to the outside of the opening in the storage attitude.

### Effect of the Invention

The submersible cleaning robot of the present invention is provided with an auxiliary cleaning work device, so it is possible to clean the surface of a cleaning subject item with a cleaning nozzle unit provided within a robot body and also with a cleaning nozzle unit of the auxiliary cleaning work device. As a result, it is possible to efficiently and stably clean the surface of the cleaning subject item in a wide range.

### Brief Description of Drawings

FIG. 1 is a general plan view that includes a partial cross-section of a submersible cleaning robot according to a first embodiment of the present invention.
FIG. 2 is a side view of the submersible cleaning robot in FIG. 1.
FIG. 3 is a side view in which an auxiliary cleaning work device of the submersible cleaning robot in FIG. 1 has been raised.
FIG. 4 is a rear view of the submersible cleaning robot in FIG. 1.
FIG. 5 is a rear view in which the auxiliary cleaning work device of the submersible cleaning robot in FIG. 1 has been rotated.
FIG. 6 is a cross-sectional side view of the auxiliary cleaning work device.
FIG. 7 is a cross-sectional side view that shows a connected state of the auxiliary cleaning work device and a robot body.
FIG. 8A is a rear view that shows a cleaning state of the submersible cleaning robot according to the first embodiment of the present invention, FIG. 8B is a side view of the state shown in FIG. 8A, and FIG. 8C is a side view of the state shown in FIG. 8A.
FIG. 9 is a perspective view of an entire submersible cleaning robot according to a second embodiment of the present invention.
FIG. 10 is a plan view of the submersible cleaning robot in FIG. 9.
FIG. 11 is a side view that includes a partial cross-section of the submersible cleaning robot in FIG. 9.
FIG. 12 is a perspective view that shows an overview of a control system of the submersible cleaning robot in FIG. 9.
FIG. 13A is a plan view that shows a compass and a compass mounting member that are used in the submersible cleaning robot in FIG. 9, and FIG. 13B is a cross-sectional side view of the same.
FIG. 14 is an enlarged cross-section of the compass and the compass mounting member that are used in the submersible cleaning robot in FIG. 9.
FIG. 15 is a front view that shows an image reflected in a monitor apparatus.
FIG. 16 is a front view that shows an image reflected in a monitor apparatus.
FIG. 17 is a perspective view that shows a state in which an aquaculture fish net is cleaned with a submersible cleaning robot.
FIG. 18 is a perspective view of an entire submersible cleaning robot according to a third embodiment of the present invention.
FIG. 19 is a side view that includes a partial cross-section of the submersible cleaning robot in FIG. 18.
FIG. 20 is a plan view of the submersible cleaning robot in FIG. 18.
FIG. 21 is a front view of the submersible cleaning robot in FIG. 18.
FIG. 22 is a side view of an entire submersible cleaning robot according to another embodiment of the present invention.

### Description of Reference Numerals

- 1: submersible cleaning robot
- 2: robot body
- 3: cleaning nozzle unit
- 4: propulsion force-generating propeller (propeller)
- 5: rotary shaft
- 6: raising handle
- 21: opening
- 60: leg portion
- 62: incline portion
- 64: catch portion
- 65: hook (raising means)
- 66: support portion
- 67: coil spring (biasing means)
- 70: auxiliary cleaning work device
- 71: work device body
- 72: cleaning nozzle unit
- 73: propeller
- 77: rotary joint
- 76: rotary shaft
- 83: support arm
- 100: submersible camera
- 105: monitor apparatus
- 110: compass
- 111: compass mounting member
- 112: plate
- 113: mounting base
- A: suspended attitude
- B: stored attitude
- C: cable
- H: high-pressure water hose
- N: aquaculture fish net (cleaning subject item)

### Best Mode for Carrying Out the Invention

Hereinafter, an embodiment of the present invention is explained with reference to the drawings.

In this embodiment, a case is described in which the present invention is applied as a self-propelled submersible cleaning robot for cleaning an aquaculture fish net.

### First Embodiment

### - Configuration of Submersible Cleaning Robot -

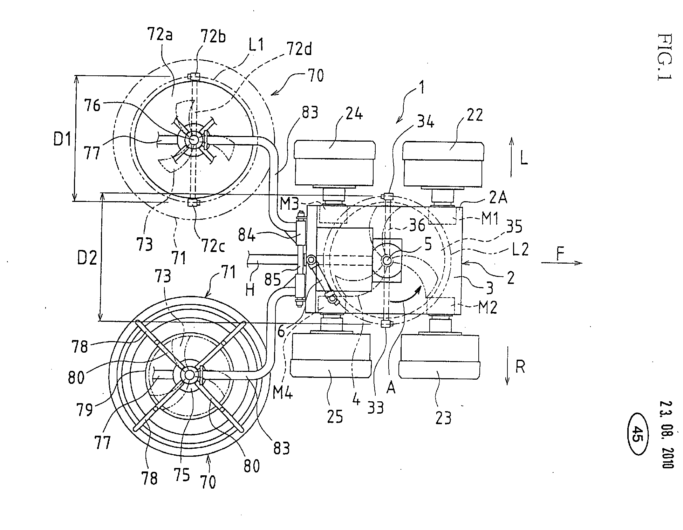

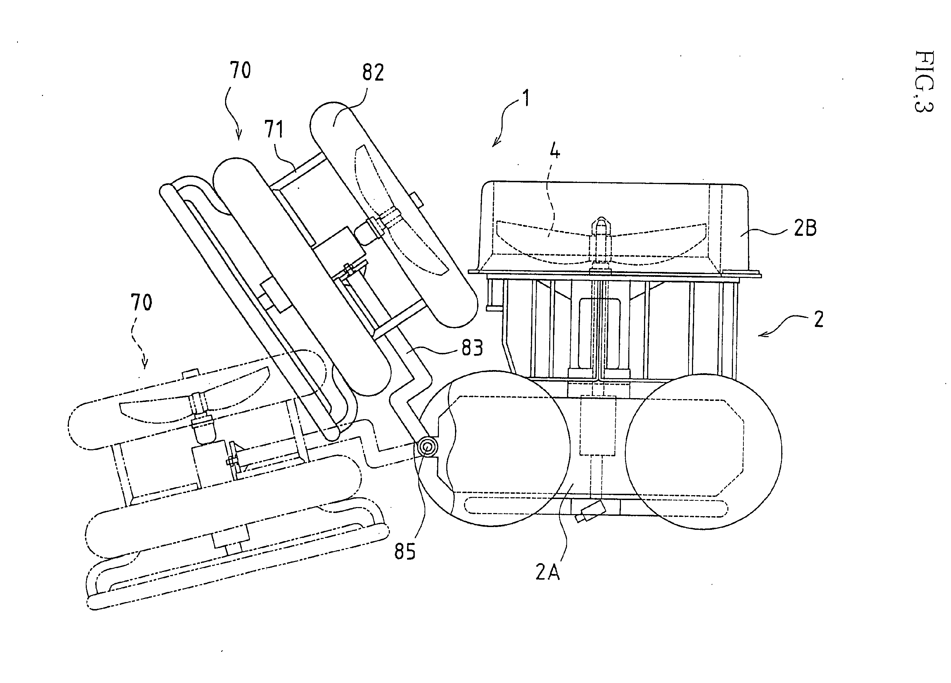

FIGS. 1 to 8 show a submersible cleaning robot 1 according to a first embodiment. The submersible cleaning robot 1 according to this embodiment includes, as shown in FIGS. 1 to 5, a robot body 2, a cleaning nozzle unit 3, and a propulsion force-generating propeller 4 (hereinafter, simply referred to as a "propeller").

The robot body 2 includes a lower nozzle side body 2A, an upper propeller side body 2B, and a pair of planar connecting bodies 2C that connect these bodies to each other. The propeller side body 2B is disposed such that a predetermined distance exists between the propeller side body 2B and the nozzle side body 2A, and an introduction space D that functions as a water introduction channel is formed in this gap between the propeller side body 2B and the nozzle side body 2A.

In the propeller side body 2B, an opening 21 with a comparatively large diameter is formed so as to be in communication with the introduction space D. The propeller 4 is housed inside of this opening 21. That is to say, the configuration is such that water is introduced from the introduction space D towards the propeller 4 by rotation of the propeller 4.

On the left and right side surfaces of the nozzle side body 2A, four wheels (front, rear, left, and right wheels) 22, 23, 24, and 25 are rotatably mounted. In FIG. 1, the direction shown by arrow F indicates the forward direction of the submersible cleaning robot 1. Furthermore, arrow R indicates the right side when facing in the forward direction of the submersible cleaning robot 1, and arrow L indicates the left side.

In the nozzle side body 2A, for example, four submersible motors M1, M2, M3, and M4 are housed, and drive shafts of the respective submersible motors M1, M2, M3, and M4 are respectively connected to the wheels 22, 23, 24, and 25.

Cables (not shown) are connected to each of the submersible motors M1, M2, M3, and M4. In a state in which the submersible cleaning robot 1 has been submerged underwater, a cable extends from a power supply device, not shown, that is on land or on a boat, to the submersible cleaning robot 1, and thus power is supplied to each of the submersible motors M1, M2, M3, and M4. Thus, the wheels 22 to 25 rotate according to driving of the submersible motors M1, M2, M3, and M4.

If, for example, when the submersible cleaning robot 1 is in a state of forward travel (travel in the direction of arrow F in FIG. 1), the rotation speed of the right-side submersible motors M2 and M4 is set higher than the rotation speed of the left-side submersible motors M1 and M3, then the travel direction of the submersible cleaning robot 1 will change to face the left direction in FIG. 1 (the direction of arrow L). Conversely, if the rotation speed of the left-side submersible motors M1 and M3 is set higher than the rotation speed of the right-side submersible motors M2 and M4, then the travel direction of the submersible cleaning robot 1 will change to face the right direction (the direction of arrow R).

It is possible to change the direction of travel in the same way also in a case where the submersible cleaning robot 1 is driven in reverse by rotating the submersible motors M1, M2, M3, and M4 in the direction opposite to that stated above. In addition, if the submersible motors M1 and M3 and the submersible motors M2 and M4 are rotated in mutually opposite directions, the submersible cleaning robot 1 can be rotated.

In terms of submersible motors, two submersible motors M1 and M2 may be provided so as to rotatably drive the left and right front wheels 22 and 23, and the left-side front and rear wheels 22 and 24 and the right-side front and rear wheels 23 and 25 may be mechanically connected using a belt mechanism or a chain mechanism.

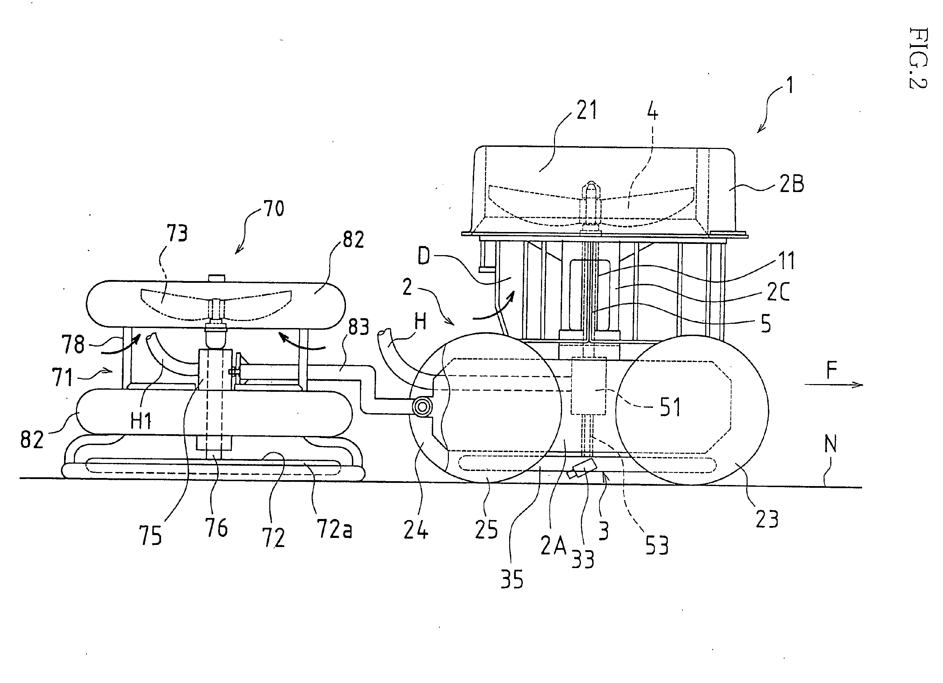

The cleaning nozzle unit 3 jets high-pressure water supplied from a high-pressure water hose H towards an aquaculture fish net N as a cleaning subject item, and through that jetting, cleans the aquaculture fish net N. As shown in FIG. 2, the cleaning nozzle unit 3 is mounted on a bottom section of a rotary shaft 5 inserted into a support cylinder 11 fixed perpendicularly upward from the nozzle side body 2A. This rotary shaft 5 is rotatably supported by a rotary joint 51 such that the rotary shaft 5 is disposed at a central part of the opening 21 formed in the propeller side body 2B.

One end of the high-pressure water hose H is connected to the rotary joint 51. The other end of the high-pressure water hose H is connected to a high-pressure pump, not shown, that is on land or on a boat, and high-pressure water pressure fed from this high-pressure pump is supplied to the cleaning nozzle unit 3. Note that a high-pressure water channel 53 is formed inside the rotary shaft 5, the high-pressure water channel 53 being for sending high-pressure water supplied from the high-pressure water hose H via the rotary joint 51 to the cleaning nozzle unit 3.

The cleaning nozzle unit 3 includes a disk-shaped rotary body 35 fixed to a bottom edge of the above-described rotary shaft 5, and inside this rotary body 35, a jetting channel 36 for high-pressure water is formed communicating with the high-pressure water channel 53 of the above-described rotary shaft 5, and in a radial direction of the rotary body 35. A plurality (a pair in this embodiment) of cleaning nozzles 33 and 34 communicating with the jetting channel 36 are mounted on an outer peripheral section of the rotary body 35.

These cleaning nozzles 33 and 34 are inclined downward at a predetermined angle such that the jetting direction of the high-pressure water is oriented towards a surface of the aquaculture fish net. Specifically, the cleaning nozzles 33 and 34 are oriented in a direction such that the rotary body 35 is rotated in the direction of arrow A, and are inclined downward at a predetermined angle (for example, 5 to 45°), towards the surface of the aquaculture fish net N.

Thus, in a case where high-pressure water is jetted from the cleaning nozzles 33 and 34, the cleaning nozzle unit 3 will rotate together with the rotary shaft 5 due to a jetting reaction force generated pursuant to the jetting of this high-pressure water at a surface of the aquaculture fish net N. In other words, this cleaning nozzle unit 3 is configured so as to be capable of removing algae and shellfish, etc. that are attached to the aquaculture fish net N over a wide range by jetting high-pressure water at the surface of the aquaculture fish net N while rotating around an axis of the rotary shaft 5.

The propeller 4 is provided integrated with the rotary body 5, such that the propeller 4 is housed within the opening 21 of the propeller side body 2B. Accordingly, in a case where high-pressure water is jetted from the cleaning nozzles 33 and 34, and the rotary shaft 5 rotates together with the cleaning nozzle unit 3 as a result of the jetting reaction force thereof, this propeller 4 also rotates integrally, thus generating a water flow for pushing the submersible cleaning robot 1 downwards. As a result, a propulsion force that pushes the submersible cleaning robot 1 towards the aquaculture fish net N is generated when performing a cleaning operation.

The submersible cleaning robot 1 is provided with an auxiliary nozzle unit 6 for preventing drag around from occurring in the robot body 2 due to rotation of the rotary shaft 5. That is to say, when the cleaning nozzle unit 3 and the rotary shaft 5 have rotated, due to sliding resistance, etc. between the above-explained rotary shaft 5 and the rotary joint 51, the robot body 2 also attempts to rotate in the direction of rotation of the rotary shaft 5, and the purpose of the auxiliary nozzle unit 6 is to cancel out that force. High-pressure water is supplied to the auxiliary nozzle unit 6 via a branching hose (not shown) that has been connected to the high-pressure water hose H.

To the rear of the robot body 2, a pair of auxiliary cleaning work devices 70 are detachably installed, separated from each other by a predetermined gap. The auxiliary cleaning work devices 70 are provided with a cleaning nozzle unit 72 and a propeller 73 within a work device body 71, and thus have the same basic configuration as the robot body 2 side.

The cleaning nozzle unit 72 is fixed to the lower end of a rotary shaft 76 that is rotatably supported by a rotary joint 75, such that the cleaning nozzle unit 72 rotates together with the rotary shaft 76. Also, the rotary shaft 76 rotates together with the cleaning nozzle unit 72 due to high-pressure water supplied from a high-pressure water hose H1 (a hose capable of supplying high-pressure water independent from the aforementioned high-pressure water hose H) connected to the rotary joint 75. Like the aforementioned cleaning nozzle unit 3, the cleaning nozzle unit 72 is provided with cleaning nozzles 72b and 72c in a rotary body 72a that has a jetting channel 72d.

Also, the diameter D1 of the nozzle rotation trajectory L1 of each auxiliary cleaning work device 70 shown by virtual lines in FIG. 1 slightly overlaps the diameter D2 of the nozzle rotation trajectory L2 of the robot body 2 side. Due to the nozzle rotation trajectories overlapping each other in this way, an area left uncleaned does not occur between the cleaning nozzle units 3 and 72. Moreover, by setting the same diameter for each nozzle rotation trajectory, about three times the cleaning area is obtained as in a case of having only the nozzle of the robot body 2 side.

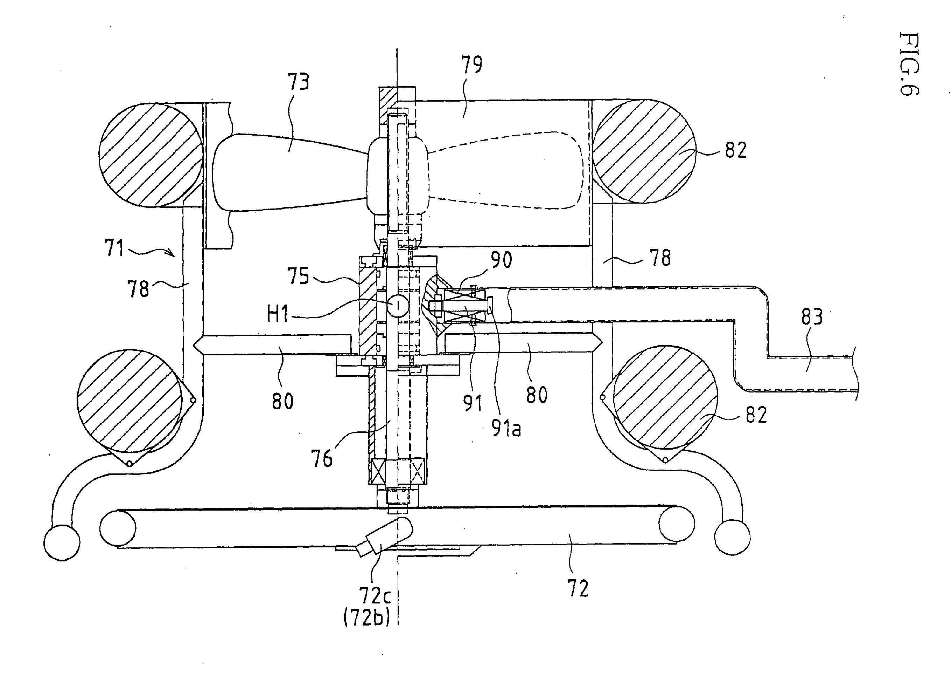

As shown in FIG. 6, the work device body 71 is provided with a plurality of pipes 78 in the vertical direction, a cylindrical body 79 fixed so as to internally contact the upper end of the pipes 78, and a support pipe 80 that fixes the rotary joint 75 at the center of the work device body 71. At the outer circumference of the work device body 71, ring-shaped floats 82 are externally fitted and fixed. Due to buoyancy of the floats 82, when in water, the auxiliary cleaning work device 70 floats in a state in which the cleaning nozzle unit 72 is pointing downward.

The propeller 73 is fixed to the upper portion of the rotary shaft 76 such that the propeller 73 is housed within the cylindrical body 79.

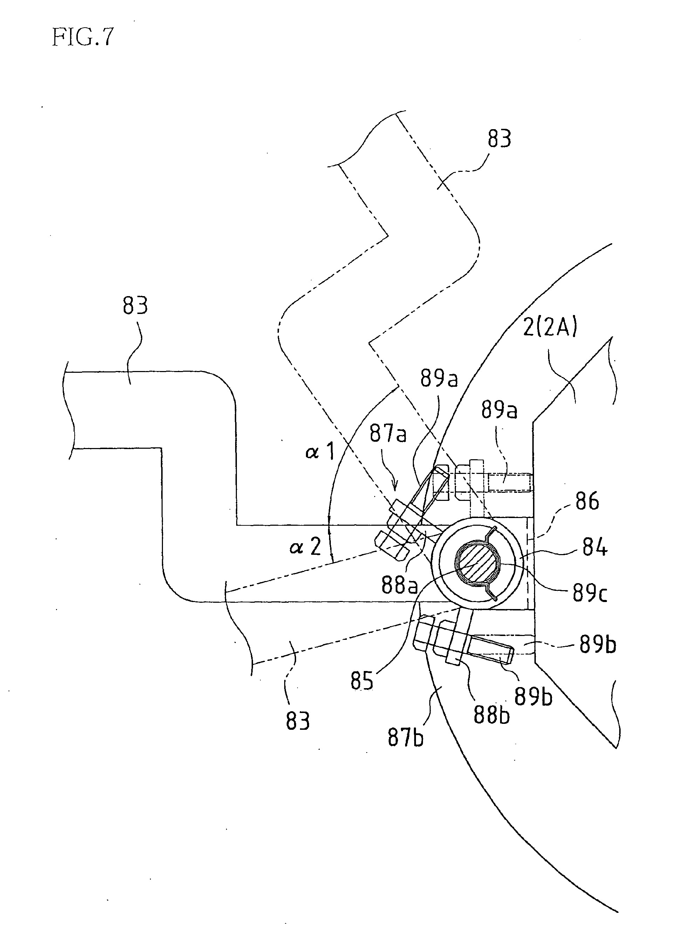

The work device body 71 is detachably installed to the robot body 2 (the nozzle side body 2A) via a support arm 83 that is approximately L-shaped when viewed from above. Specifically, as shown in FIG. 7, a cylindrical boss portion 84 is fixed to one end of the support arm 83, and a support shaft 85 in the horizontal direction and in the left-right direction of the robot body 2 is inserted through the boss portion 84. The support shaft 85 is fixed to the robot body 2 via a bracket 86. Note that the bracket 86 is detachable from the robot body 2 via a bolt (not shown).

The support arm 83 swings in the upward and downward directions respectively so that the angle at which it is set changes, centered on the support shaft 85. For example, the support arm 83 swings upward in the range of an angle a1 of 50 to 60° (preferably about 55°), and swings downward in the range of an angle a2 of 10 to 20° (preferably about 15°). Positioning of the swing angle of the support arm 83 is performed by positioning means 87a and 87b. In the positioning means 87a and 87b, as shown in FIG. 7, stoppers (bolts) 89a and 89b are respectively screwed to mounting members 88a and 88b provided protruding from the boss portion 84.

When the support arm 83 swings upward, the stopper 89a is put in contact with the end face of the robot body 2. When the support arm 83 swings downward, the stopper 89b is put in contact with the end face of the robot body 2. By adjusting separation of the stoppers 89a and 89b from the end face, it is possible to adjust the upward or downward swing angle of the support arm 83.

Within the boss portion 84, a coil spring 89c is provided as a biasing means, and the auxiliary cleaning work device 70 is biased to the upper position and maintains that upward attitude when underwater and the auxiliary cleaning work device 70 is unnecessary and not being used.

As shown in FIG. 6, a cylindrical shaft receiving member 90 is fitted into the other end of the support arm 83, and a support shaft 91 that is provided protruding into the rotary joint 75 is inserted into the shaft receiving member 90 so as to be capable of rotating relative to the shaft receiving member 90. The support arm 83 is retained by a large-diameter cap portion 91 a of the support shaft 91.

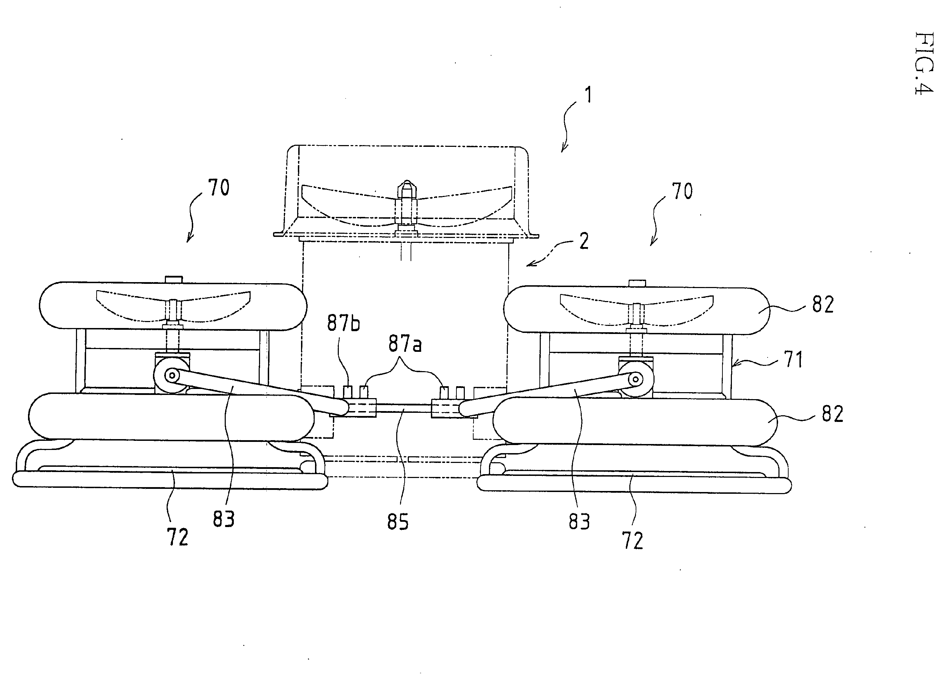

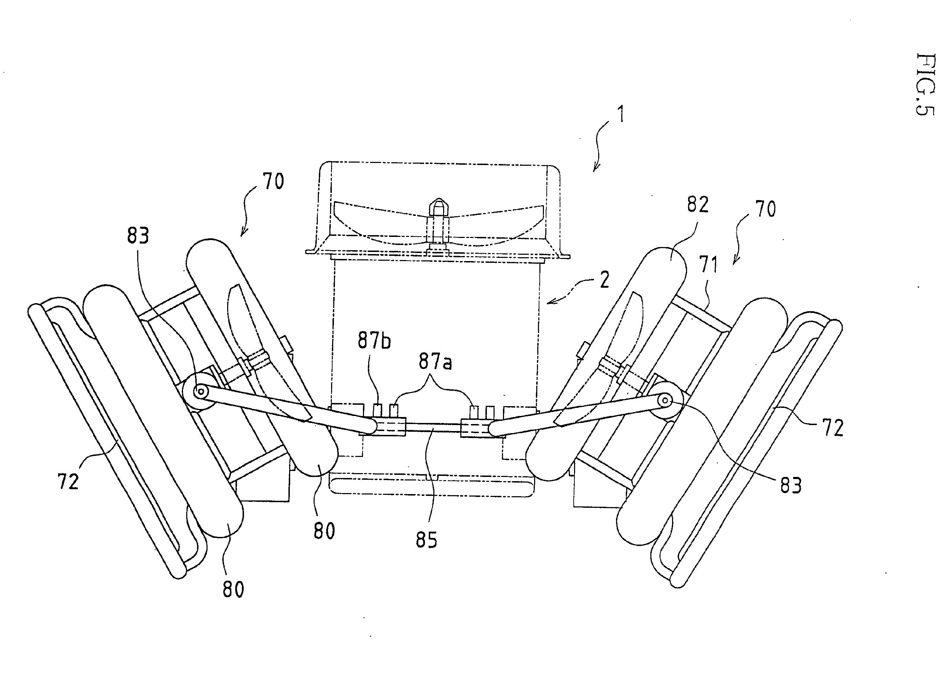

Accordingly, the auxiliary cleaning work device 70 rotates around the support arm 83 (the support shaft 91) such that the lower cleaning nozzle unit 72 is inclined pointing to the outside (see FIGS. 4 and 5). Underwater, the auxiliary cleaning work device 70 can maintain an approximately perpendicular state in which the cleaning nozzle unit 72 is pointing downward, due to the floats 82.

Also when the aquaculture fish net N is inclined, the auxiliary cleaning work device 70 rotates around the support arm 83 according to the inclination angle of the net. Note that due to the floats 82, when underwater, the auxiliary cleaning work device 70 maintains an approximately perpendicular state in which the cleaning nozzle unit 72 is pointing downward, so it is not particularly necessary to provide a rotational positioning means, but it is possible to provide a positioning means like the positioning means 87a and 87b, such that the auxiliary cleaning work device 70 does not rotate by a set angle (for example, 60 degrees) or more.

### - Operation of Submersible Cleaning Robot -

Next is a description of an operation to clean an aquaculture fish net N using the submersible cleaning robot 1 configured as described above.

When cleaning is performed by the submersible cleaning robot 1, as shown in FIG. 1, the submersible cleaning robot 1 is submerged inside (in the space used for aquaculture) of the aquaculture fish net N from land or from a boat. Then, electrical power is supplied to each submersible motor from a cable and high-pressure water is supplied to the cleaning nozzle unit 3 and the auxiliary nozzle unit 6 from the high-pressure water hose H.

Thus, each of the submersible motors M1, M2, M3, M4 drives and the submersible cleaning robot 1 travels along the aquaculture fish net N due to rotation of each of the wheels 22 to 25.

High-pressure water is jetted from each of the cleaning nozzles 33 and 34 of the cleaning nozzle unit 3. As a result of the jetting of high-pressure water from the cleaning nozzles 33 and 34, algae and shellfish, etc. attached to the aquaculture fish net N are removed and discharged outside the aquaculture space, and the aquaculture fish net N is cleaned.

The cleaning nozzle unit 3, the rotary shaft 5, and the propeller 4 rotate in unison as a result of the jetting reaction force pursuant to this jetting of high-pressure water. Due to this rotation of the propeller 4, water is introduced from the introduction space D towards the propeller 4, and thus water current blown out from the opening 21 is produced. As a result, propulsion force is obtained in the submersible cleaning robot 1, and a state is maintained in which the wheels 22 to 25 make contact with the aquaculture fish net N with a predetermined pressure.

For this reason, there is no lifting up of the wheels 22 to 25 from the aquaculture fish net N, and the submersible cleaning robot 1 performs cleaning of the aquaculture fish net N while traveling stably along the aquaculture fish net N.

Note that the auxiliary cleaning work device 70 maintains an upright attitude when the auxiliary cleaning work device 70 is in a stopped state, and therefore does not hinder underwater travel of the submersible cleaning robot 1.

When high-pressure water is supplied to the auxiliary cleaning work device 70 via the high-pressure water hose H1, high-pressure water is also jetted from each of the cleaning nozzles 72b and 72c of the cleaning nozzle unit 72. Due to jetting of high-pressure water from the cleaning nozzles 72b and 72c, the propeller 73 rotates together with the cleaning nozzle unit 72, and so water is introduced towards the propeller 73 from between the pipes 78, and a downward propulsion force is obtained in the auxiliary cleaning work device 70. As a result, the support arm 83 swings downward and the lower face of the work device body 71 contacts the aquaculture fish net N with a predetermined pressure.

It is both possible for the auxiliary cleaning work device 70 to maintain this cleaning attitude, and for the cleaning nozzle unit 72 to remove algae and shellfish, etc. attached to the aquaculture fish net N further to the outside to the left and right than the cleaning range of the robot body 2 itself. In this way, because a pair of the auxiliary cleaning work devices 70 that clean further to the outside to the left and right than the cleaning range of the robot body 2 itself are provided, it is possible to clean the aquaculture fish net N stably and in a wide range, even without accelerating the traveling speed of the submersible cleaning robot 1.

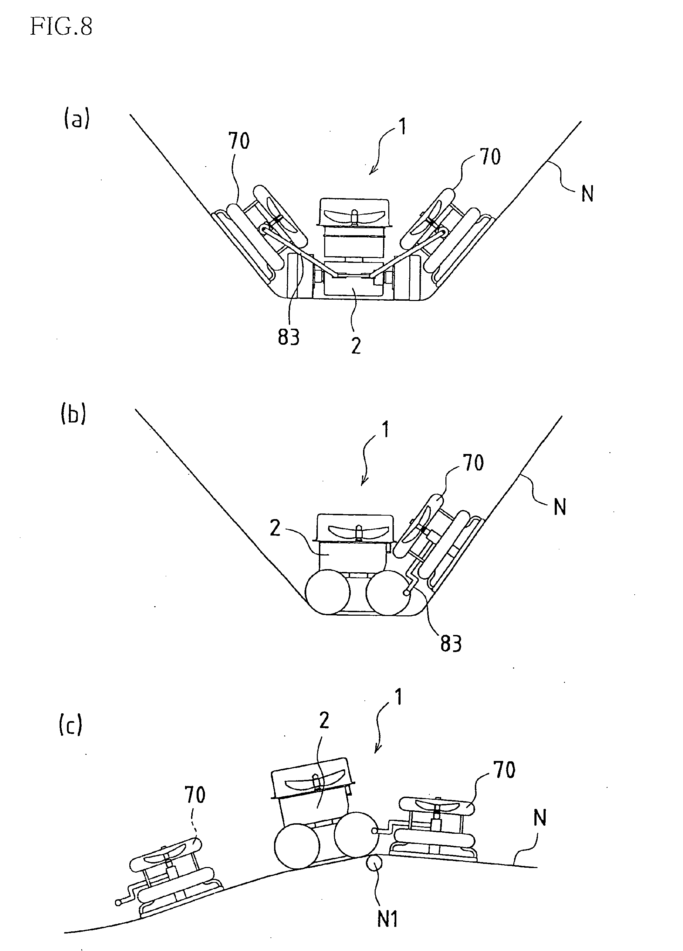

Also, the aquaculture fish net N sags downward under the own weight of the submersible cleaning robot 1. Specifically, when the aquaculture fish net N to the left and right sides of the submersible cleaning robot 1 inclines (see FIG. 8A), in this case, both of the auxiliary cleaning work devices 70 change attitude by rotating to the left and right around the support arm 83 according to the sag angle of the aquaculture fish net N, so it is possible to clean further to the outside to the left and right than the cleaning range of the traveling robot body 2 itself.

Also, when the aquaculture fish net N to the rear of the submersible cleaning robot 1 inclines (see FIG. 8B), in this case, both of the auxiliary cleaning work devices 70 change attitude by the support arm 83 swinging upward according to the sag angle of the aquaculture fish net N, so it is possible to clean further to the outside to the left and right than the cleaning range of the traveling robot body 2 itself.

Also, when the aquaculture fish net N is large, there may be instances in which a rope N1 forms a rib of the net (see FIG. 8C). In this case, the rope N1 portion becomes a crest, and thus undulations occur in the aquaculture fish net N. Accordingly, it is necessary for the submersible cleaning robot 1 to pass over the crest.

When traveling over a crest, the support arm 83 swings downward due to the propulsion force of the propeller 73, so even if undulating portions with slight peaks and valleys occur in the aquaculture fish net N, the auxiliary cleaning work devices 70 follow the undulating shape of the aquaculture fish net N, so it is possible to travel over the undulating portions of the aquaculture fish net N while also the auxiliary cleaning work devices 70 perform cleaning.

Note that, supposing a case in which the inclination angle of a crest is sudden, because the downward swing angle of the support arm 83 is set, a bend of at least a predetermined angle of the auxiliary cleaning work devices 70 relative to the robot boy 2 is regulated. Therefore, it is possible to prevent impossibility of travel in a state in which the robot body 2 and the auxiliary cleaning work devices 70 are straddling the rope N1, and so stable cleaning work is possible.

Also, supply of water to the auxiliary cleaning work devices 70 is stopped in a case where the auxiliary cleaning work devices 70 are unnecessary, or in a case where the auxiliary cleaning work devices 70 are contacting a deformation of the aquaculture fish net N or a narrow portion of the net N, and due to frictional force between the net face and the auxiliary cleaning work devices 70, rotation/turning of the robot body 2 is obstructed. Thus, with the coil spring 89c within the boss portion 84, the auxiliary cleaning work device 70 is biased to the upper position underwater, and is separated from the aquaculture fish net surface N. By stopping the supply of water to the auxiliary cleaning work devices 70 in this way, and thus separating the auxiliary cleaning work devices 70 from the aquaculture fish net surface, it is possible to eliminate effects on the operation of the robot body 2.

### Second Embodiment

### - Configuration of Submersible Cleaning Robot -

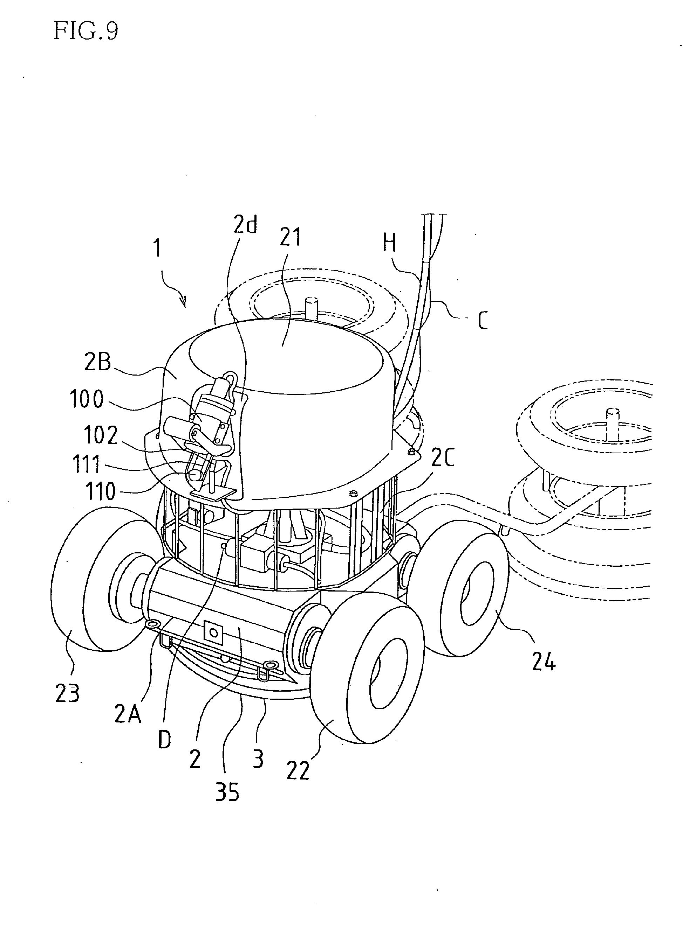

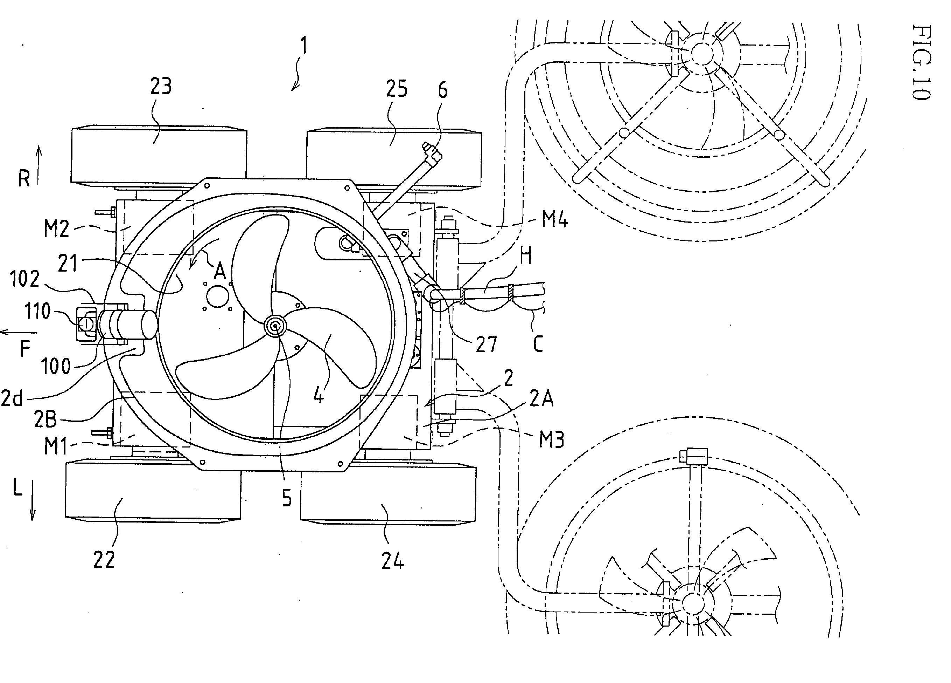

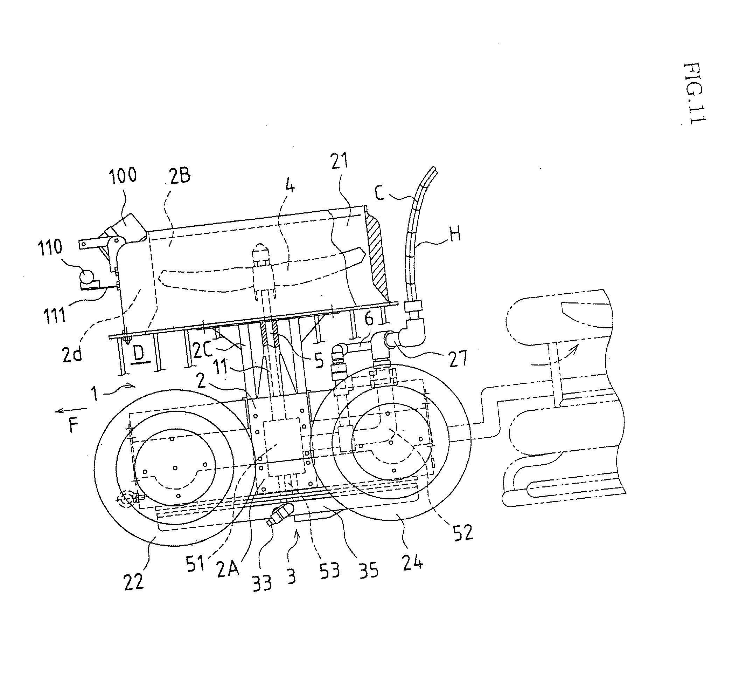

A second embodiment of the present invention is shown in FIGS. 9 to 17, for example. In this second embodiment, the same members as in the above first embodiment are assigned the same reference numerals, and a description of those members is omitted here.

A submersible camera 100 that is capable of checking the cleaning status, etc. of an aquaculture net is provided at the front of the propeller side body 2B. Captured image information of the submersible camera 100 is sent to a control box 29 via an electric signal line of a cable C. More specifically, a mounting concave portion 2d is provided at the front of the propeller side body 2B, and a bracket 102 is fixed to the mounting concave portion 2d.

The submersible camera 100 is mounted to the bracket 102 at an incline, such that the submersible camera 100 can capture images frontward and downward. Checks of an aquaculture fish net underwater are performed in real time, by capturing images of the underwater state with the submersible camera 100, and reflecting those images on a screen 105a of a monitor apparatus 105 disposed on land or on a boat.

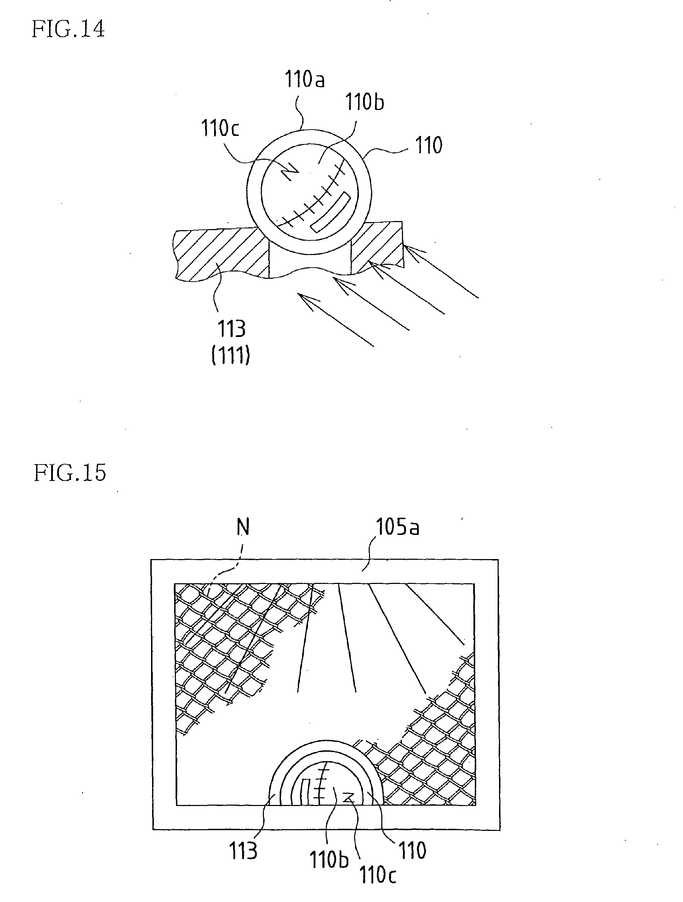

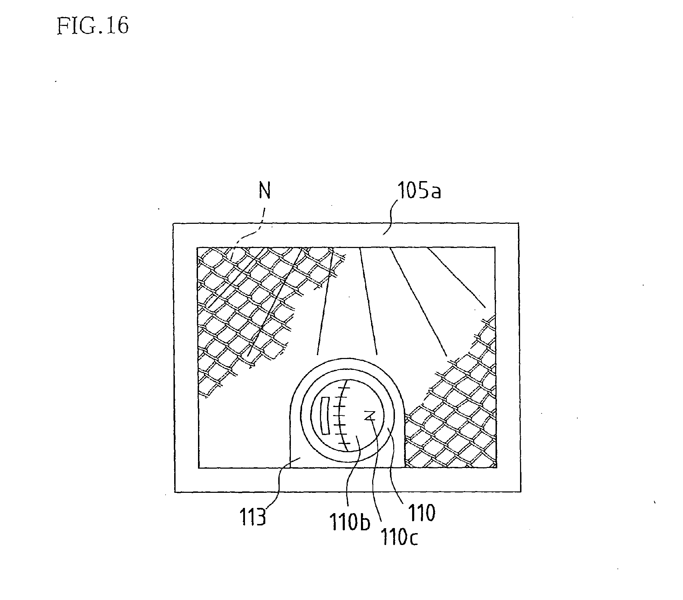

Also, a compass 110 is disposed within the field of view of the submersible camera 100 (in the screen 105a) such that the compass 110 is reflected in a corner of images captured with the submersible camera. The compass 110 shows the attitude (up/down/left/right) and the north/south/east/west heading of the submersible cleaning robot 1 during underwater cleaning work, and part of the compass 110 may be displayed such that it is viewable, as shown in FIG. 15, or the entire compass 110 may be displayed, as shown in FIG. 16.

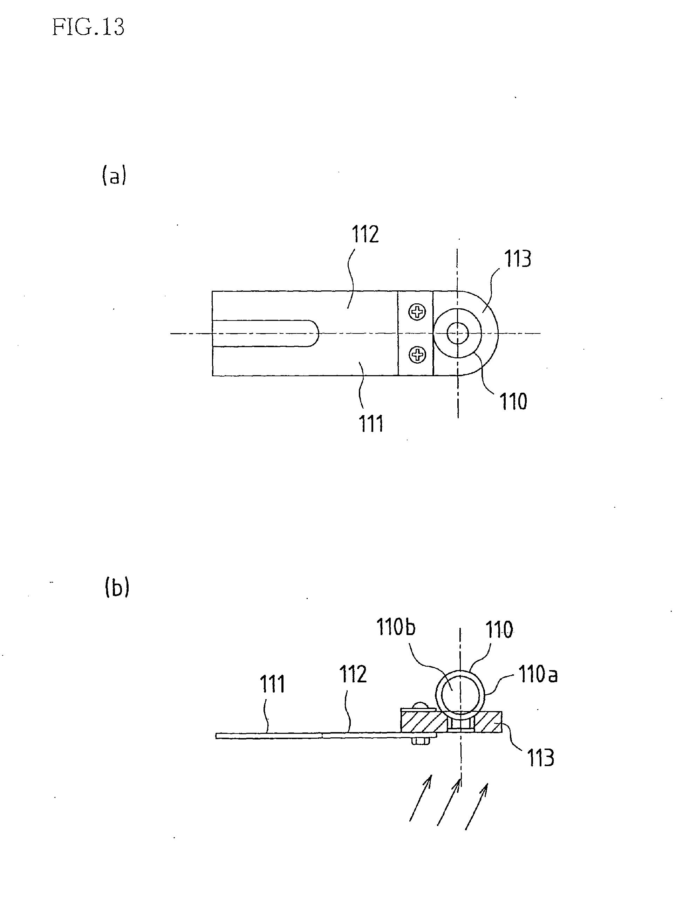

The compass 110 is mounted to the bracket 102 via a compass mounting member 111. As shown in FIGS. 13A, 13B, and 14, the compass mounting member 111 is configured from a transparent plate 112 and a mounting base 113 comprised of a transparent acrylic member fixed to the end of the plate 112.

The compass 110 is a spherical compass, for example. The compass 110 is configured from a transparent compass body 110a fixed to the mounting base 113, and a spherical core 110b that is housed within the compass body 110a. The core 110b is provided with a display portion 110c that indicates a north/south/east/west heading. The entire core 110b is configured transparently, including the display portion 110c, or, portions other than the display portion 110c are configured transparently.

Transparency of the entire core 110b including the display portion 110c refers to a case where the display portion 110c is semitransparent such that confirmation is possible even with backlighting. As for transparency of portions other than the display portion 110c, in this case the other portions are transparent and light-permeable, but the display portion 110c is black, for example, and thus non-transparent and not light-permeable.

### - Operation of Submersible Cleaning Robot -

Next is a description of an operation to clean an aquaculture fish net N using the submersible cleaning robot 1 configured as described above.

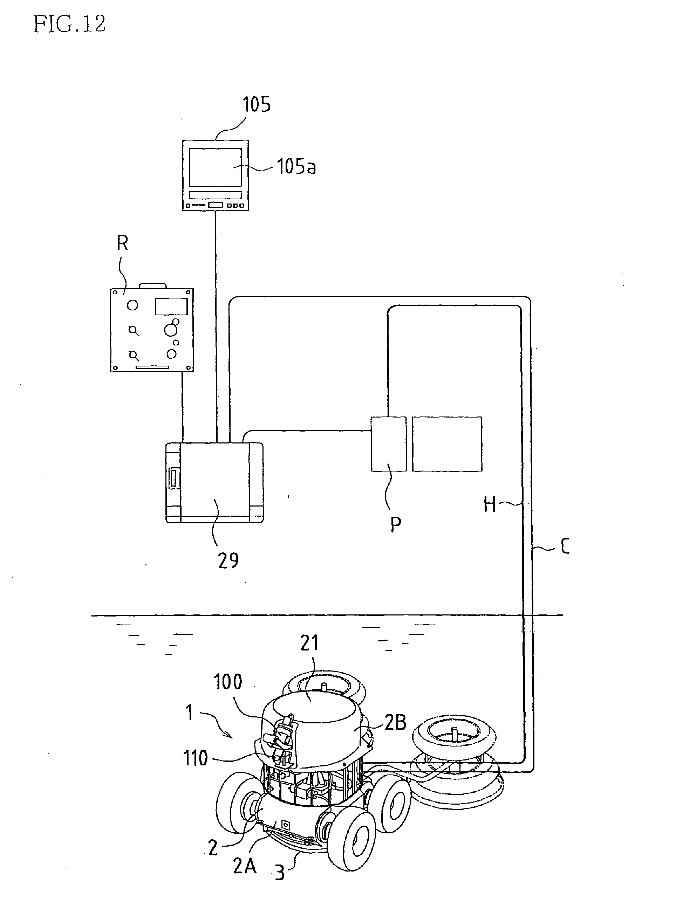

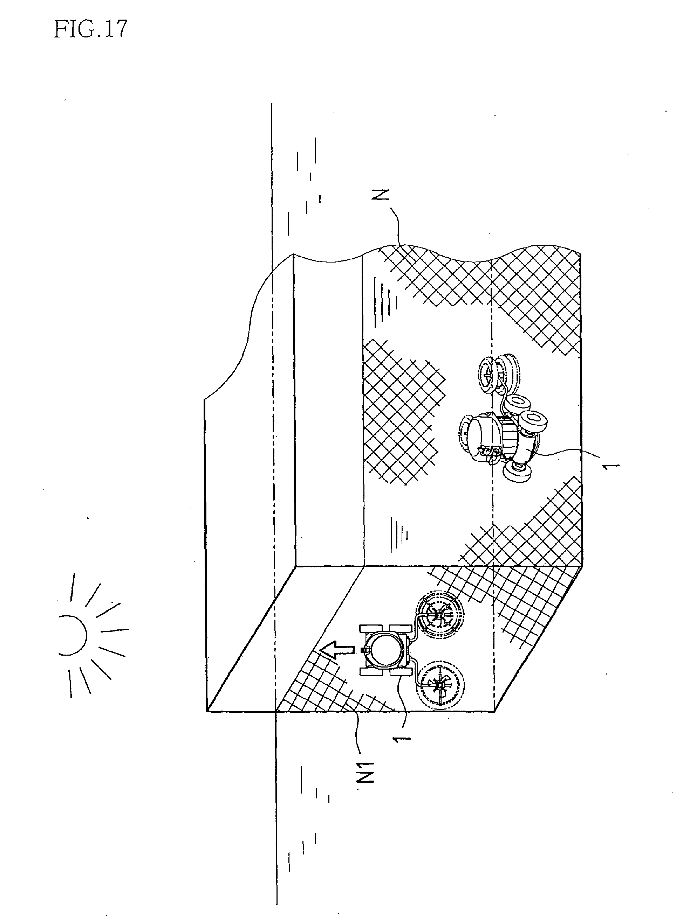

When cleaning is performed by the submersible cleaning robot 1, as shown in FIG. 17, the submersible cleaning robot 1 is submerged inside (in the space used for aquaculture) of the aquaculture fish net N from land or from a boat. By operating a remote control box R shown in FIG. 12, a person performing cleaning work supplies power to each submersible motor from the cable C and supplies high-pressure water to the cleaning nozzle unit 3 and the auxiliary nozzle unit 6 from the high-pressure water hose H. As a result of this, each of the submersible motors M1, M2, M3, and M4 drives and the submersible cleaning robot 1 travels along the aquaculture fish net N due to rotation of the wheels 22 to 25.

Also, during this cleaning, images captured by the submersible camera 100 are displayed on the screen 105a of the monitor apparatus 105. The compass 110 that indicates the heading of the images being captured by the submersible camera 100 is also displayed on the screen 105a. Accordingly, the person performing cleaning work is able to perform the cleaning work while constantly confirming the cleaning status of the aquaculture fish net N and the travel direction of the submersible cleaning robot 1.

For example, when cleaning the peripheral portion N1 of the aquaculture fish net N with the lower face of the robot body 2 facing the sun while traveling upward or downward, the submersible camera 100 is backlit. However, because the mounting base 113 and the compass 110 itself are configured transparently, sunlight passes through the mounting base 113 and the compass 110. Therefore, the person performing cleaning work is able to clearly view the core 110b even when there is backlighting, and therefore is able to know the attitude and travel direction of the submersible cleaning robot 1.

The effect of being able to view the compass 110 with the monitor apparatus 105, even if the submersible camera 100 is backlit in this way, is the same as in the case of a lighting apparatus other than the sun that is provided above the aquaculture fish net N and illuminates the inside of the aquaculture fish net N, or a lighting apparatus that is appropriately mounted to the robot body 2.

### Third Embodiment

### - Configuration of Submersible Cleaning Robot -

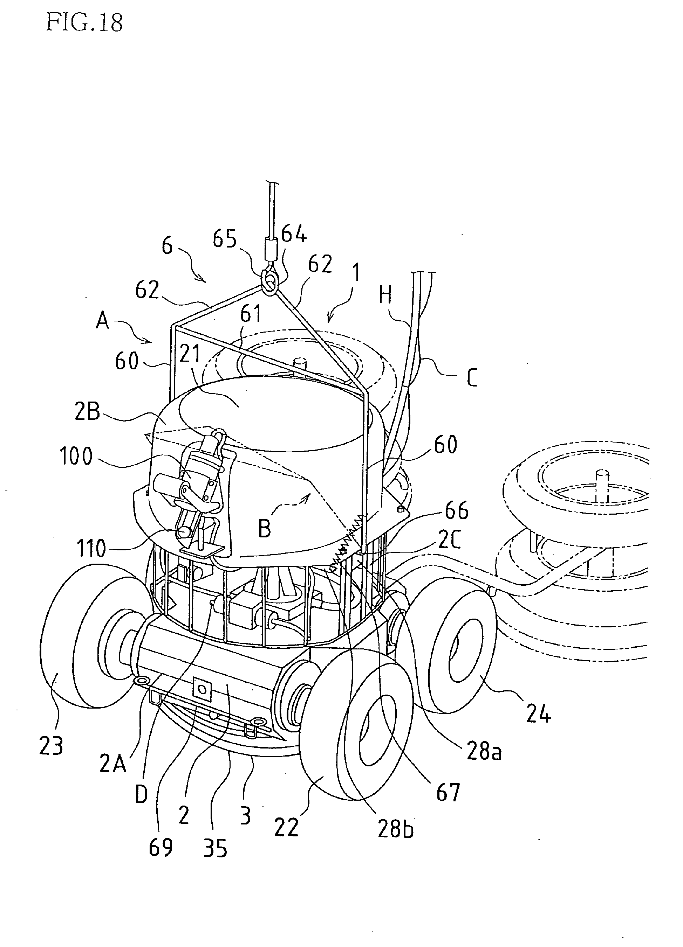

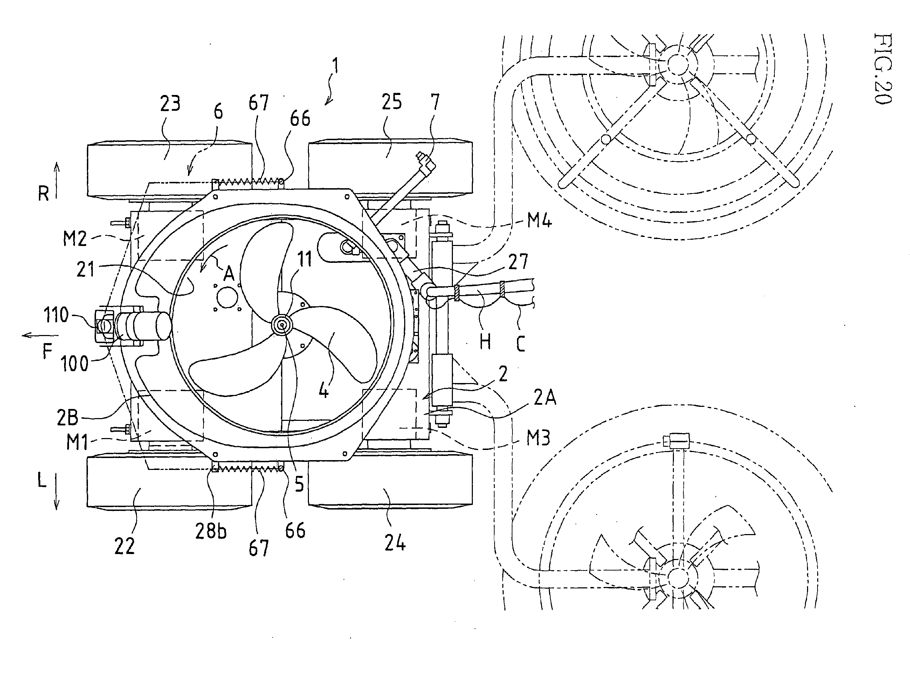

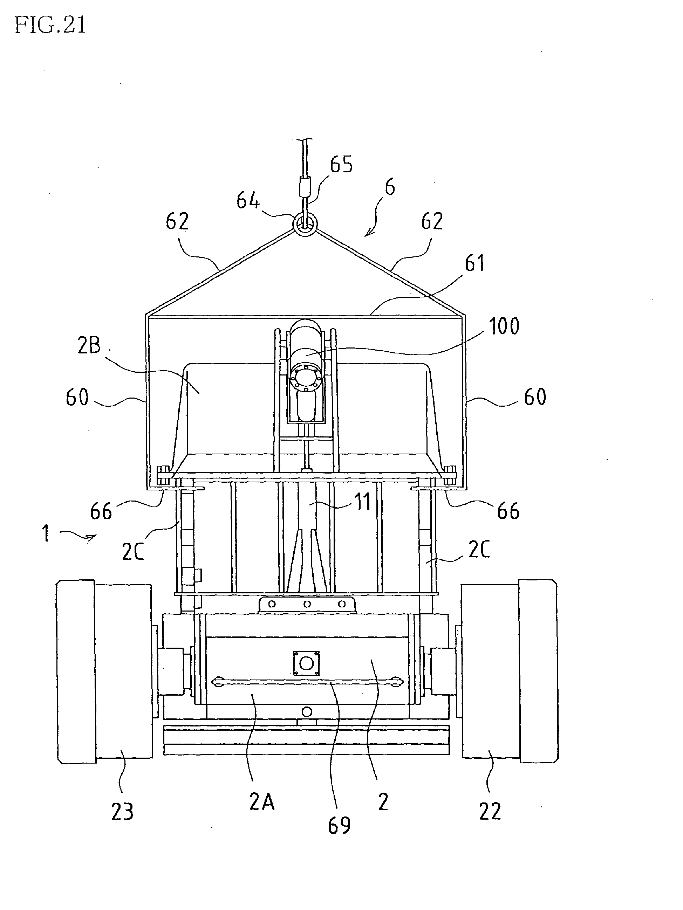

A third embodiment of the present invention is shown in FIGS. 18 to 21, for example. In this third embodiment, the same members as in the above first embodiment are assigned the same reference numerals, and a description of those members is omitted here.

A raising handle 6 is provided at a predetermined position of the robot body 2. That is, the raising handle 6 is configured from a wire body, and includes a pair of leg portions 60 positioned on both sides of the propeller side body 2B, a connecting portion 61 that connects the upper end of both leg portions 60, and a pair of incline portions 62 that are provided inclining upward towards each other from the upper end of both leg portions 60. Further, provided at the upper end of the incline portions 62 is a ring-shaped catch portion 64 where a hook 65 serving as a raising means such as a crane is detachably caught.

At the bottom of the pair of leg portions 60, support portions 66 are provided towards the inside of the robot body 2. Each of the support portions 66 is inserted through a bracket 28a provided between connecting bodies 2C below the propeller side body 2B.

Due to inserting the support portions 66 through the bracket 28a in this way, the raising handle 6 is rotatable around the support portions 66. More specifically, when the catch portion 64 is suspended by the hook 65, due to the own weight of the submersible cleaning robot 1, the pair of leg portions 60 are in perpendicular suspended attitude A.

At this time, the catch portion 64 is positioned above the propeller side body 2B and in approximately the center front-to-rear and left-to-right of the robot body 2. Accordingly, the center of gravity of the submersible cleaning robot 1 is positioned below the support portions 66, so front-to-rear and left-to-right balance is maintained well. As a result, the submersible cleaning robot 1 maintains a state in which it is suspended in an attitude of an approximately level running state (an attitude in which the front/rear/left/right wheels 22, 23, 24, and 25 are pointing downward).

When the submersible cleaning robot 1 in which the auxiliary cleaning work devices 70 are installed is suspended, the submersible cleaning robot 1 tilts due to the auxiliary cleaning work devices 70. However, the weight of the auxiliary cleaning work devices 70 is less than the weight of the robot body 2, so the incline of the submersible cleaning robot 1 is small, and thus suspension of the submersible cleaning robot 1 is not obstructed. Note that it is also possible to suspend the submersible cleaning robot 1 in a state in which the auxiliary cleaning work devices 70 have been detached.

Also, an elastic body 67 that stores the raising handle 6 to the front side of the nozzle side body 2A is provided between the leg portions 60 and the propeller side body 2B. The elastic body 67, for example, is configured from a coil spring (spring), and one end of the elastic body 67 is connected at an intermediate portion of the leg portions 60, while the other end is connected to a bracket 28b provided below the nozzle side body 2A. Accordingly, the coil spring 66 is biased to a storage attitude B in which the raising handle 6 moves to the robot body side, but when the submersible cleaning robot 1 is suspended, the raising handle 6 changes attitude to the suspended attitude A in opposition to the elastic force of the coil spring 66. That is, the raising handle 6 is rotatable around the support portions 66 so as to change attitudes between the suspended attitude A and the storage attitude B.

Also, the raising handle 6 is positioned at the ring-shaped portion of the nozzle side body 2A in the storage attitude B. That is, the raising handle 6 is positioned outside of the opening 21 that houses the propeller 4 by contacting or approaching the ring-shaped portion of the nozzle side body 2A. Note that with respect to positioning of the raising handle 6 in the storage attitude B, the raising handle 6 may be caused to directly contact the propeller side body 2B, or the raising handle 6 may be caused to contact a stopper provided in the propeller side body 2B.

### - Operation of Submersible Cleaning Robot -

Next is a description of a cleaning operation of an aquaculture fish net using the submersible cleaning robot 1 configured as described above.

When cleaning is performed by this submersible cleaning robot 1, the submersible cleaning robot 1 is submerged inside (in the space used for aquaculture) of an aquaculture fish net from land or from a boat using a crane. Specifically, the hook 65 of the crane-side rope is connected to the catch portion 64 of the raising handle 6, and by submerging the submersible cleaning robot 1 underwater while maintained approximately level, the submersible cleaning robot 1 is put near the surface of the aquaculture fish net. At this time, it is preferable that it is possible to maintain the submersible cleaning robot 1 near the surface of the aquaculture fish net with a handle (or eye bolt) 69 provided in the nozzle side body 2A connected to a ship hull side (or raft) with a rope.

Afterward, the ropes that are connecting the crane-side rope hook 65 and the handle 69 are respectively removed. Next, when each of the submersible motors M1, M2, M3, and M4 are driven, the submersible cleaning robot 1 travels along the aquaculture fish net due to rotation of the wheels 22 to 25.

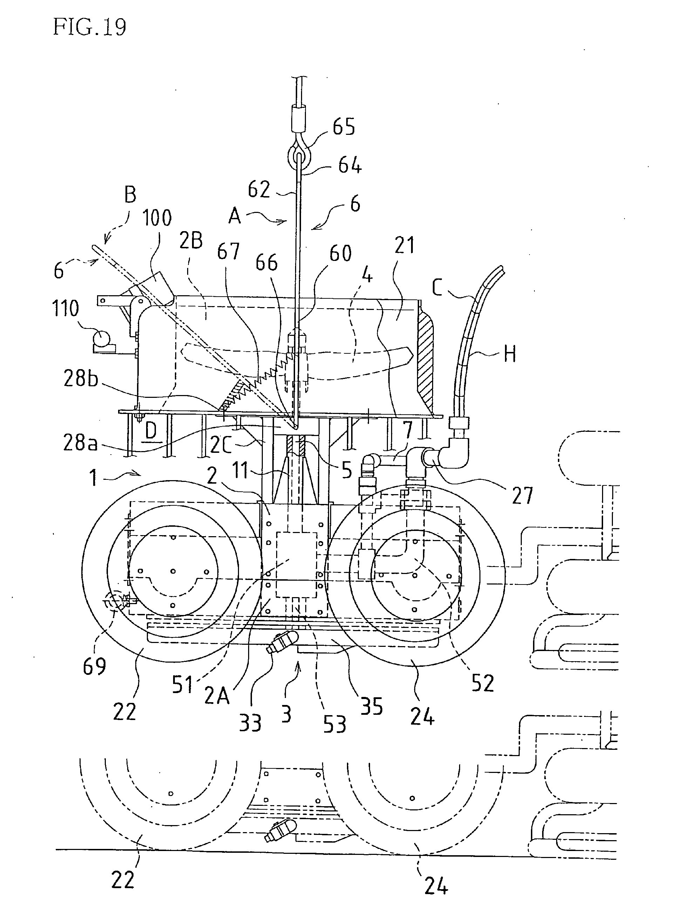

When the submersible cleaning robot 1 travels along the aquaculture fish net underwater, as shown by imaginary lines in FIGS. 18 and 19, the raising handle 6 maintains the storage attitude B in which it has moved to the propeller side body 2B, so the attitude of the raising handle 6 is low. As a result, the resistance of seawater is reduced, so travel of the submersible cleaning robot 1 underwater is not hindered.

High-pressure water is jetted from each of the cleaning nozzles 33 of the cleaning nozzle unit 3. As a result of the jetting of high-pressure water from the cleaning nozzles 33, algae and shellfish, etc. attached to the aquaculture fish net are removed and discharged outside the aquaculture space, and the aquaculture fish net is cleaned.

The raising handle 6 maintains the storage attitude B, and is positioned outside of the opening 21, so reduction of the speed of water flow blown out from the opening 21, and interference with the water flow blown out from the opening 21 by entanglement of foreign objects such as algae with the raising handle 6, does not occur. As a result, there are no adverse effects on the propulsion force of the submersible cleaning robot 1.

When the cleaning work ends, the submersible cleaning robot 1 is raised along the aquaculture fish net to the water surface, and the crane-side rope hook 65 is connected to the catch portion 64 of the raising handle 6, so that the submersible cleaning robot 1 is hoisted up from underwater. Further, the submersible cleaning robot 1 is loaded onto the ship hull (or raft).

The submersible cleaning robot 1 that has been suspended in this way can be loaded in an approximately level and stable state. Moreover, the hose H and the cable C (cables) protruding to the rear from the rear of the robot body 2 do not point downward.

If, hypothetically, the submersible cleaning robot 1 tilts and enters an unstable state in which the cables point downward, there is a risk that these cables will be sandwiched between the robot body 2 and the ground. However, with the submersible cleaning robot 1 of this embodiment, it is possible to prevent the cables from pointing downward, so there is no risk that these cables will be sandwiched between the robot body 2 and the ground, so it is also possible to prevent damage to the cables.

Moreover, it is unnecessary to have a dedicated assisting worker that adjusts the attitude of the submersible cleaning robot 1 to a level attitude in addition to a worker that operates the crane. Further, likewise in a case where the submersible cleaning robot 1 transported by a ship hull is unloaded on land, it is possible to put the submersible cleaning robot 1 in an approximately level state, and so it is possible to safely perform the work of raising and lowering the submersible cleaning robot 1.

Note that the raising handle 6 may also rotate to the rear of the robot body 2.

The present invention is not limited to the first to third embodiments above. For example, the cleaning subject item is not limited to the aquaculture fish net N; the invention can also be used in the cleaning of bridge legs, ship hulls, and pools, etc.

The auxiliary cleaning work devices 70 and the robot body 2 side cleaning nozzle units 3 and 72 can be configured from a pair of horizontal extension pipes that extend in the horizontal direction from the rotary shafts 5 and 76, and a cleaning nozzle provided at the end of the horizontal extension pipes.

The propellers 73 may rotate in the same direction, or they may respectively rotate in opposite directions.

Also, the robot body 2 does not need to be separated into the nozzle side body 2A and the propeller side body 2B, and the introduction space D may be formed in the robot body 2 by opening a portion thereof.

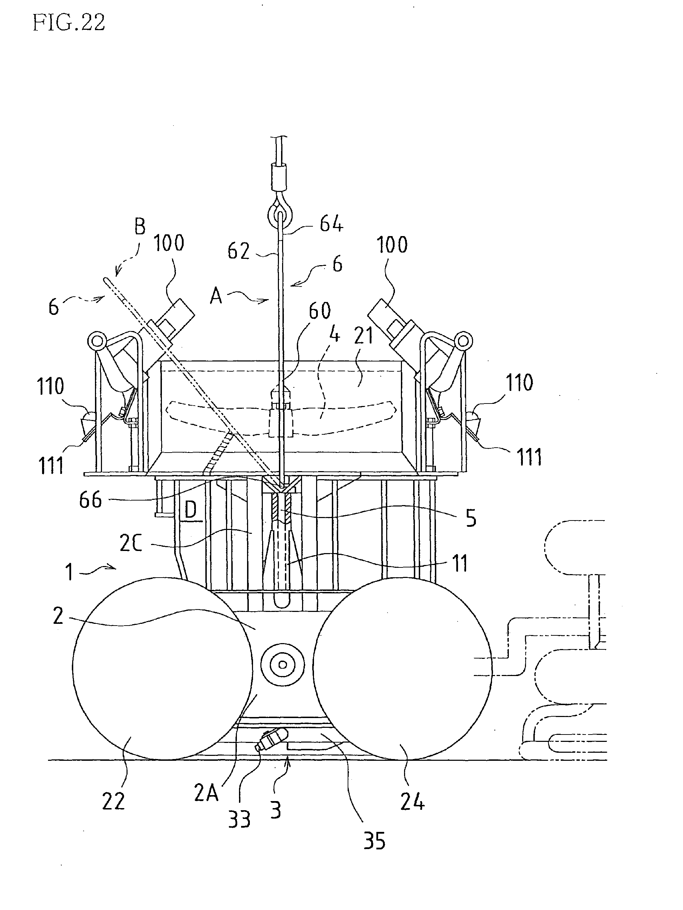

In the above embodiments, an example was given of a case where the submersible camera 100 is for travel in one direction, but as shown in FIG. 22, it is also possible to provide submersible cameras in both the front and rear directions of the propeller side body 2B.

## Claims

1. A submersible cleaning robot comprising a robot body that moves along the surface of a cleaning subject item present underwater, and a cleaning nozzle unit that is provided within the robot body and cleans the cleaning subject item by jetting high-pressure water towards the surface of the cleaning subject item, wherein:
an auxiliary cleaning work device is mounted to the robot body, and the auxiliary cleaning work device comprises a rotary shaft rotatably provided in a work device body, a cleaning nozzle unit that is provided in a bottom section of the rotary shaft, jets high-pressure water, and rotates in unison with the rotary shaft due to a reaction force of jetting of high-pressure water at the surface of the cleaning subject item and thus cleans the cleaning subject item, and a propeller that rotates pursuant to rotation of a rotary shaft provided above the aforementioned rotary shaft, thus producing a force for pushing the work device body towards the surface of the cleaning subject item.

2. The submersible cleaning robot according to claim 1, wherein the auxiliary cleaning work device is connected to the rear of the robot body via a support arm, the support arm is provided in order to raise and lower the auxiliary cleaning work device and is capable of swinging in the upward and downward directions by a set angle, and moreover, the auxiliary cleaning work device is capable of rotating around the support arm such that the below cleaning nozzle unit inclines towards the outside.

3. An auxiliary cleaning work device that is installed to a submersible cleaning robot that cleans a cleaning subject item by jetting high-pressure water from a cleaning nozzle unit towards a surface of the submerged cleaning subject item while moving along the surface of this cleaning subject item,
the auxiliary cleaning work device comprising a rotary shaft rotatably provided in a work device body, a cleaning nozzle unit that is provided in a bottom section of the rotary shaft, jets high-pressure water, and rotates in unison with the rotary shaft due to a reaction force of jetting of high-pressure water at the surface of the cleaning subject item and thus cleans the cleaning subject item, and a propeller that rotates pursuant to rotation of a rotary shaft provided above the aforementioned rotary shaft, thus producing a force for pushing the work device body towards the surface of the cleaning subject item, wherein the work device body is connectable to the robot body via a support arm, the support arm is provided in order to raise and lower the auxiliary cleaning work device and is capable of swinging in the upward and downward directions by a set angle, and moreover, the auxiliary cleaning work device is capable of rotating around the support arm such that the below cleaning nozzle unit inclines towards the outside.

4. The submersible cleaning robot according to claim 1, wherein the robot body is provided with a submersible camera that captures images to the front of the robot body and a compass that is disposed in the field of view of the submersible camera and indicates a heading, and at least a core that displays the compass heading is transparently configured, and images that have been captured by the submersible camera are displayed along with the compass on a screen of a monitor apparatus disposed at a position separated from the robot body.

5. The submersible cleaning robot according to claim 4, wherein the compass is fixed to the robot body via a transparent mounting base.

6. The submersible cleaning robot according to claim 1, wherein the robot body is provided with a raising/lowering handle having a catch portion detachably connected to a raising/lowering handle such as a rope, the raising/lowering handle being provided with a catch portion that is capable of changing positions between a suspended attitude A in which the catch portion is positioned above the robot body and the robot body can be raised/lowered and a storage attitude B in which the connecting portion moves more to the robot body side than in the suspended attitude A, and a biasing means that biases the raising/lowering handle to the storage attitude.

7. The submersible cleaning robot according to claim 6, wherein the cleaning nozzle unit is mounted to a rotary shaft that is rotatably provided in the robot body so as to rotate due to a reaction force of high-pressure water jetted at the surface of the cleaning subject item, the rotary shaft is provided with a propeller that produces a propulsion force for pushing a robot body towards the surface of the cleaning subject item, an introduction space such that a propeller that rotates can introduce water and an opening in which the propeller is housed are formed in the robot body, and the raising/lowering handle is positioned to the outside of the opening in the storage attitude.

8. The submersible cleaning robot according to claim 6 or 7, wherein the biasing means comprises a spring that connects the robot body to the raising/lowering handle.
